# EUROPEAN PATENT APPLICATION

(11) **EP 4 101 290 A1**
(43) Date of publication of application: **14.12.2022**
(21) Application number: 21179144.7
(22) Date of filing: 11.06.2021
(51) Int. Cl.: A01G 18/20, A01G 18/22

(54) **PROCESS AND PLANT FOR PREPARING MUSHROOM SUBSTRATE MATERIAL**

(71) Applicant: CNC Grondstoffen B.V., 6596 MA Milsbeek (NL)
(72) Inventor: van Hassel, Willem, 6596 MA Milsbeek (NL); van Iperen, Antonius Martinus Gijsbertus, 6596 MA Milsbeek (NL); Postma, Pieter Richard, 6852 MD Huissen (NL)
(74) Representative: De Vries & Metman

(57) **Abstract**

Plant and process for preparing a mushroom substrate material. The substrate material is first added to a mixer and sterilized, characterized in that the substrate material is pressurized in the mixer during sterilization. Preferably, the substrate material in the mixer is first subjected to a subatmospheric pressure before sterilization.

## Description

The present invention relates to a process for preparing mushroom substrate material. Such substrate material must be sterilized before being inoculated in order to neutralize pathogens and to avoid colonization of the substrate material by competing microorganisms.

US4204364 discloses a process using a mixer. The raw substrate material is loaded into the mixer and subsequently sterilized with steam to a temperature of about 121°C. In subsequent steps, the substrate material is cooled and inoculated.

Such sterilization processes take considerable time and require sufficient homogenization in order to assure that the complete batch is sufficiently sterilized.

It is an object of the invention to provide a faster and more efficient process with more homogenous heating and cooling, respectively.

The object of the invention is achieved with a process for preparing mushroom substrate material, wherein the substrate material is first added to a mixer and sterilized, characterized in that the substrate material is pressurized in the mixer during sterilization, e.g., with a pressure of at least 1,2 bar, e.g., up to about 2 bar or more, or a gauge pressure of at least 0,8 barg, e.g. at least 1 barg. It has been found that such a pressurization results in up to 2,5 times shorter processing times for sterilization. For instance, a batch of about 5 m³ can be sterilized in about 10 minutes.

During the sterilization step, the substrate material can be sterilized by injecting a sterilizing medium, such as steam, and heated to a temperature above 120°C.

Preferably, the substrate material in the mixer is first subjected to a sub-atmospheric pressure before sterilization starts, to remove air from the substrate material. A sub-atmospheric pressure of 100 mbar or lower, e.g. about 50 mbar or lower, can be used, e.g., for about 0,5 - 5 minutes, e.g., about 1 - 2 minutes. This allows injection of a saturated steam directly into the mixer content, without condensation of steam in residual air, resulting in a significantly more effective steam treatment.

After the sterilization step, the substrate material is cooled before it is inoculated. Cooling can be done in a short time if the substrate material is cooled by vacuum cooling within the mixer. The substrate material can for example be cooled to below 30°C, e.g., about 25°C or lower.

To accelerate cooling, water can be added before the substrate material is vacuum cooled. Cooler water reduces the time for vacuum cooling. The amount of water can for example be about 0,5 - 5 wt.%. e.g., about 1 - 2 wt.% relative to the total weight of the mixer charge. The temperature of the water can for example below 12°C, e.g. about 5°C or lower. In this manner cooling down the substrate material from 121°C to 25°C can take place within about 20 minutes.

After the substrate material is cooled, it is discharged from the mixer to be inoculated. In a specific embodiment, the substrate material is discharged from the mixer via a transporter, e.g., a screw transporter, with one or more inlet ports for dosing mushroom spawn into the passing flow of substrate material.

The substrate material is subsequently packed, usually into plastic bags, and slightly compacted. The filled bags are then stored for four or more weeks at a temperature of about 20°C to allow full mycelial colonization. The bags can then be shipped to the farmers where the mycelium continues to grow and form fruiting bodies and mature to mushrooms of the desired size, which can then be harvested.

The process for preparing the substrate material can for example be carried out in a plant comprising a pressure mixer, i.e., a mixer with a rotor, such as a stirrer, within a pressure vessel. In this respect, a pressure vessel is a vessel designed to hold a mixable material under a pressure substantially above or below ambient pressure, for example at least 1,2 bar or at least 1,5 bar or at least 2 bar.

The pressure mixer may comprise:
- an inlet port, e.g., at its top end, connected to one or more sources, such as silos or similar storages, for substrate material ingredients;
- a discharge port, e.g., at its lower end; and
- a steam inlet port, operatively connected to a steam source, such as a steam generator.

The pressure mixer may further comprise a vacuum port operatively connected to a vacuum pump for removing air from the pressure vessel and create a sub-atmospheric pressure within the pressure mixer; and/or a water inlet operatively connected to a source of water.

The discharge port can be operatively connected to an inoculation station, such as a temperature controlled screw conveyor, which may for example have a spawn dosing inlet port connected to a spawn reservoir. Such a screw conveyor allows accurate temperature control while the spawn is homogenously mixed into the substrate material.

Downstream of the inoculation station, the plant may comprise a packing station for packing the inoculated substrate material into plastic bags.

Suitable mixers include for example conical paddle mixers, preferably with a vertical axis. A particularly suitable pressure mixer is a paddle mixer with a conical pressure vessel, a rotor with a vertical rotor axis centrally within the pressure vessel, and a motor drive configured to rotate the rotor in a rotational direction. The rotor axis may carry rotor arms extending radially from the rotor axis and having free ends supporting paddles, vanes or blades. The paddles can be downwardly inclined in the rotational direction, so the paddles lift the substrate material when the rotor is rotated. This generates a toroidal flow with an upward flow near the wall of the pressure mixer and a downward flow near the rotor axis.

The substrate material is a mixable particulate material, in particular a lignocellulosic particulate material, such as sawdust. Suitable wood types for sawdust include for example oak, beech, alder, sweet gum trees or mixtures thereof. Besides sawdust, the substrate material can contain further ingredients such as meal or pellets, e.g., of straw, nutrients and/or other additives, such as disinfectants like H2O2 or citric acid.

The process is particularly suitable for preparing substrate material for lignophile mushrooms or mushrooms growing on lignocellulosic material, e.g., exotic mushrooms, such as shiitake mushrooms, king oyster mushrooms, grey oyster mushrooms, pom pom blanc mushrooms or the like.

The invention will be further explained with reference to the accompanying drawings.
- Figure 1:: shows schematically an exemplary embodiment of a plant for the process of the present invention;
- Figure 2:: shows an exemplary embodiment of a pressure mixer for use with the process of the invention.

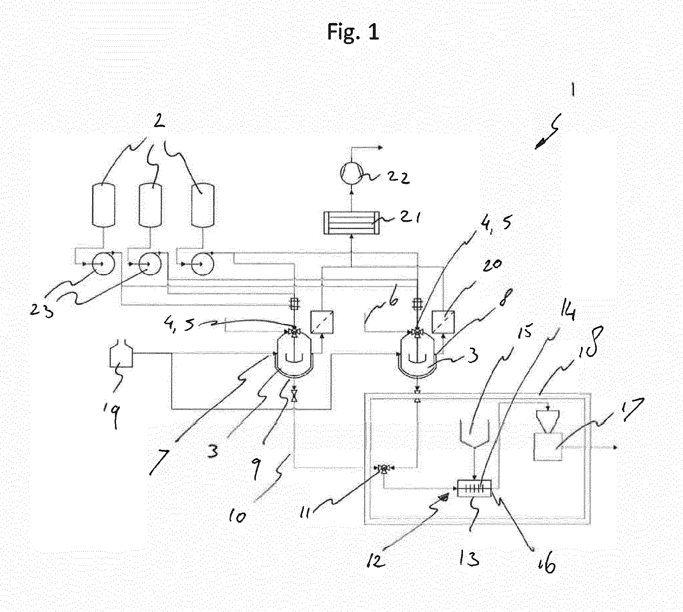

Figure 1 shows a plant 1 for preparing mushroom substrate material in accordance with the present invention. Substrate material ingredients are stored in silos 2, the main substrate material ingredient being sawdust. In the shown lay out the plant 1 comprises two pressure mixers 3 in parallel arrangement. Each of the three silos 2 is connected to respective feed inlets 4 on both pressure mixers 3. The feed inlets 4 are at the top ends of the pressure mixers 3 and closeable by mean of a three-way valve 5 which is also connected to a water supply line 6. The pressure mixers 3 also have a steam inlet port 7, a vacuum port 8 and a discharge port 9 at their lower ends.

The discharge ports 9 of the two pressure mixers 3 are connected to discharge lines 10 leading to a valve 11 connecting the two discharge lines 10 to an inlet port 12 of a temperature controlled transport screw 13. The transport screw 13 has an dosing port 14 for dosing spawn from a spawn reservoir 15, and an outlet port 16 for delivering inoculated substrate material to a packing machine 17. The valve 11, transport screw 13, spawn reservoir 15 and packing machine 17 are located in a clean room 18.

The steam inlet ports 7 of the two pressure mixers 3 are connected to a steam generator 19. The vacuum ports 8 of the pressure mixers 3 are provided with a filter unit 20 and are jointly connected to a condenser 21 and a vacuum pump 22 downstream of the condenser 21.

The substrate material ingredients are dosed in accordance with a recipe optimized for the mycelium species to be inoculated. The substrate material ingredients are taken from the respective silos 2 via a pump 23 and transported to one of the pressure mixers 3. After filling the pressure mixers 3, the three way valve 5 closes the inlets 4 and the water supply lines 6. The vacuum ports 8 are then opened and the vacuum pump 22 is controlled to reduce the pressure within the pressure mixers 3 to about 10 mbar for about 1 - 2 minutes.

After reducing the air content in the pressure mixers 3 the vacuum ports 8 are closed and the steam inlets 7 are opened. Steam is forced into the pressure mixers 3 with a pressure of about 2 bar to heat the substrate material within the pressure mixers 3 to a temperature of 121°C for about 10 minutes. The steam sterilizes the substrate material and kills pathogens and competing fungi.

In a next step the steam supply is stopped and the three way valve 5 opens the water supply 6. Water at a temperature of 5°C is mixed with the substrate material to a water content of about 60 - 70 wt.% by total weight. Subsequently, the three way valve 5 closes off the water supply 6 and the vacuum port 8 is opened while the vacuum pump 23 is activated. A vacuum (about 10 mbar) is generated within the pressure mixers 3 and water evaporates which results in cooling of the substrate material. Water vapour is evacuated from the pressure mixers 3 via the filter units 20 and is condensed in the condenser 21. Optionally, this recollected water can be recycled to the pressure mixers 3 in a next process run.

After about 20 minutes the substrate material is cooled to about 25°C and the vacuum pump 22 is stopped while the vacuum port 8 is closed off.

Subsequently, the discharge of the pressure mixer 3 is opened and the substrate material is moved to the temperature controlled transport screw 13, where the substrate material is inoculated. The inoculated substrate material is then transported to the packing machine 17 where it is packed in plastic bags of about 2 - 3 kilo.

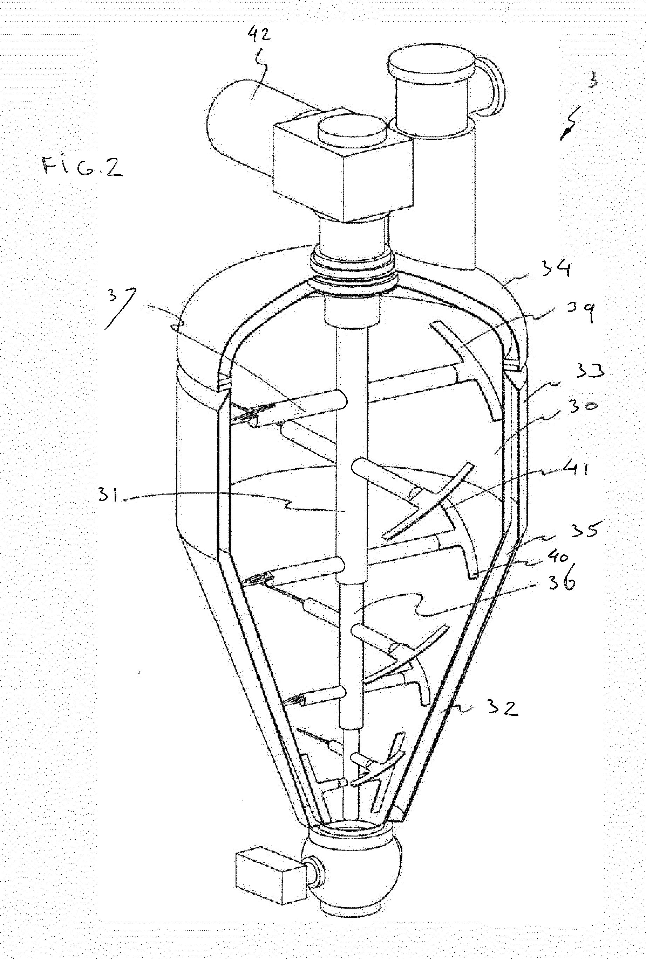

Figure 2 shows a particularly suitable example of a pressure mixer 3. The pressure mixer comprises a pressure vessel 30 and a vertical rotor 31 centrally within the pressure vessel 30.

The pressure vessel 30 is designed to withstand a substantial pressure difference between its interior and the ambient pressure. The pressure within the pressure mixer 3 can for example range between 10 mbar and 2 bar. The pressure vessel 30 has a conical lower part 32, and a cylindrical upper part 33 capped by a convex lid 34. The pressure vessel 30 has a double wall enclosing a cooling jacket 35 to provide additional cooling during cooling after steam sterilization.

The rotor 31 has a vertical rotor axis 36 carrying a plurality of radially extending rotor arms 37. Each rotor arm 37 is at right angles with a next radial arm 37. Other mutual positions of the radial arms 37 can also be used. At their free ends each of the rotor arms 37 carries a tilted longitudinal paddle 39 extending in a substantially tangential direction relative to the rotor axis and following the inner contour of the pressure vessel 30 with a clearance gap. Each paddle 39 has a lower leading tip 40 and a higher trailing tip 41.

The rotor 31 is connected to a rotor drive 42. The rotor 31 is driven in such a direction that the lower leading tips 40 of the paddles 39 move forward. This way the paddles 39 lift the substrate material near the pressure vessel wall. When the lifted material arrives at the top of the pressure vessel interior it moves toward the rotor axis outside the scope of the paddles 39 where the substrate material can sink back down. During this downward movement, the conical shape of the pressure vessel 30 gradually forces the substrate material back into the scope of the paddles 39 and the upward flow. This toroidal flow provides a very intensive mixing of the substrate material.

The rotor 31 is driven continuously during the air removal step, the steam sterilization step, the water supply step and the subsequent vacuum cooling step. The rotor 31 can for example be driven with a rotor speed of about 5 - 10 rpm. The rotor 31 is continuously driven, also during charging of the pressure mixer 3. Optionally, the rotor 31 can also be driven during discharging.

## Claims

**1.** Process for preparing a mushroom substrate material, wherein the substrate material is first added to a mixer and sterilized, **characterized in that** the substrate material is pressurized in the mixer during sterilization.

**2.** Process according to claim 1, wherein the substrate material in the mixer is first subjected to a sub-atmospheric pressure before sterilization.

**2.** Process according to claim 1, wherein after sterilization the substrate material is subsequently cooled by vacuum cooling.

**3.** Process according to claim 2, wherein water is added after sterilization before the substrate material is vacuum cooled.

**4.** Process according to any one of the preceding claims, wherein during the sterilization the substrate material is sterilized by injecting steam and heated to a temperature above 120°C.

**5.** Process according to any preceding claim, wherein the substrate material in the mixer is pressurized with a pressure of at least 1 barg during the sterilization step.

**6.** Process according to any one of the preceding claims, wherein the substrate material comprises at least one lignocellulosic particulate ingredient, such as sawdust.

**7.** Plant for preparing a mushroom substrate material comprising at least one pressure mixer, the pressure mixer comprising:
- an inlet port connected to one or more sources for substrate material ingredients;
- a discharge port; and
- a steam inlet port operatively connected to a steam source.

**8.** Plant according to claim 7, wherein the pressure mixer further comprises:
- a vacuum port operatively connected to a vacuum pump for removing air from the pressure vessel and create a sub-atmospheric pressure within the pressure mixer; and/or
- a water inlet operatively connected to a source of water.

**9.** Plant according to claim 7 or 8, wherein the discharge port is operatively connected to an inoculation station, such as a temperature controlled screw conveyor.

**10.** Plant according to claim 7, 8, or 9, wherein the pressure mixer is a paddle mixer with a conical pressure vessel, a rotor with a vertical rotor axis centrally within the pressure vessel, and a motor drive configured to rotate the rotor in a rotational direction,
wherein the rotor axis carries rotor arms extending radially from the rotor axis and having free ends supporting paddles, the paddles being downwardly inclined in the rotational direction.
